# EUROPÄISCHE PATENTSCHRIFT

(11) **EP 2 032 954 B1**
(45) Veröffentlichungstag und Bekanntmachung des Hinweises auf die Patenterteilung: **15.11.2017**
(21) Anmeldenummer: 07765667.6
(22) Anmeldetag: 27.06.2007
(51) Int. Cl.: G01G 23/01

(54) **KALIBRIERGEWICHTSANORDNUNG FÜR EINE ELEKTRONISCHE WAAGE**
MECHANICAL COUPLING FOR A CALIBRATION WEIGHT IN AN ELECTRONIC BALANCE
COUPLAGE MÉCANIQUE POUR UNE MASSE D'ÉTALONNAGE DANS UNE BALANCE ÉLECTRONIQUE

(30) Priorität: 28.06.2006 EP 06116246
(43) Veröffentlichungstag der Anmeldung: 11.03.2009
(73) Patentinhaber: Mettler-Toledo GmbH, 8606 Greifensee (CH)
(72) Erfinder: GENOUD, Dominique, CH-4600 Olten (CH); SCHILLING, Peter, CH-8854 Siebnen (CH); KÖPPEL, Thomas, CH-8618 Oetwil Am See (CH); SCHEU, Matthias, CH-8610 Uster (CH)
(74) Vertreter: Mettler-Toledo
(86) Internationale Anmeldenummer: PCT/EP2007/056415
(87) Internationale Veröffentlichungsnummer: WO 2008/000763

(56) Entgegenhaltungen:
- EP-A1- 0 955 530
- EP-A2- 0 468 159
- EP-A2- 0 789 232
- WO-A2-01/71899
- DE-A1- 19 920 436
- DE-U1- 20 119 525
- DE-U1- 20 318 788

## Beschreibung

Die Erfindung betrifft eine Kalibriergewichtsanordnung für eine elektronische Waage und insbesondere einen Antrieb für eine Kalibriergewichtsanordnung.

Elektronische Waagen werden häufig mittels eines internen Kalibriergewichts kalibriert. Für eine Kalibrierung wird ein Kalibriergewicht mit einer definierten Masse in Kraftkontakt mit der in einer Kraftmesszelle einer Waage angeordneten Kraftübertragungsvorrichtung gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftübertragungsvorrichtung wieder gelöst und das Kalibriergewicht in einer Ruheposition arretiert. Das Kalibriergewicht wird dabei durch einen Transfermechanismus aus einer Ruheposition in eine Kalibrierposition und zurück bewegt, wobei der Transfermechanismus mindestens ein Hebeelement umfasst, welches mit einem Antrieb zusammenwirkt. In der Kalibrierposition steht das Kalibriergewicht in Kraftkontakt mit der Kraftübertragungsvorrichtung, in der Ruheposition besteht kein Kraftkontakt.

Es sind verschiedene Arten von Hebeelementen und Ausführungen von Kalibriergewichtsanordnungen bekannt.

In der EP 0 468 159 B1 wird ein Kalibriergewicht offenbart, welches über paarweise horizontal gegeneinander verschiebbare Keile vertikal bewegt und so in Kraftkontakt mit der Kraftübertragungsvorrichtung der Waage gebracht wird. Der Antrieb dieses Hebelements erfolgt über eine mit den Keilen verbundene Spindel und einen motorischen Antrieb.

Ein ebenfalls vertikales Anheben bzw. Absenken erfährt ein Kalibriergewicht durch eine in der EP 0 955 530 A1 beschriebene Vorrichtung. Das Gewicht ruht auf einer Auflage, welche durch ein elektrisch angetriebenes Hebeelement bewegt wird.

In der DE 203 18 788 U1 wird beschrieben, wie ein einstückiges Kalibriergewicht durch ein rampenartiges Hebeelement angehoben und abgesenkt wird, wobei das durch einen linearen Antrieb angetriebene Hebeelement eine Art schräge Parallelbewegung ausführt.

Bei vielen Waagen sind die Kalibriergewichtsanordnung und die Kraftübertragungsvorrichtung hintereinander angeordnet, wie es in der EP 0 955 530 A1 offenbart ist. Das Kalibriergewicht kann aber auch in beispielsweise zwei Kalibriergewichte aufgeteilt und seitlich an der Kraftübertragungsvorrichtung befestigt sein, wie die in der EP 0 789 232 B1 offenbarten kreiszylindrischen Kalibriergewichte. Die beiden identischen Gewichte sind an zwei gegenüberliegenden Seiten der Kraftübertragungsvorrichtung angeordnet. Es werden zwei unterschiedliche Mechanismen zur Bewegung der Kalibriergewichte beschrieben. Im ersten Fall ruht das einen Führungsstift aufweisende Kalibriergewicht auf einer als Träger ausgestalteten Kalibriergewichtsauflage und wird zur Kalibrierung durch Abkippen der einseitig gelagerten Kalibriergewichtsauflage auf zwei darunter liegende, mit der Kraftübertragungsvorrichtung verbundene, als Stangen oder Hebel gestaltete Kalibriergewichtsträger abgesenkt. In einer zweiten Variante liegt das Gewicht in seiner Ruheposition auf einer zwischen den mit der Kraftübertragungsvorrichtung verbundenen Kalibriergewichtsträgern angeordneten Kalibriergewichtsauflage. Durch eine vertikale Abwärtsbewegung der Kalibriergewichtsauflage wird das Kalibriergewicht zur Kalibrierung in Kontakt mit den Kalibriergewichtsträgern gebracht.

Die DE 201 19 525 U1 offenbart eine Kalibriergewichtsanordnung mit einer Hubvorrichtung für eine Kalibriervorrichtung, welche zwei gehäusefest gelagerte gleichsinnig ausgerichtete Winkelhebel umfasst, deren senkrechte Hebelarme durch einen waagrechten Schieber miteinander gekoppelt sind und auf deren waagrechten Hebelarmen das Kalibriergewicht aufliegt.

Angetrieben werden die erwähnten Hebeelemente im Allgemeinen durch Servomotoren. Nachteilig an der Verwendung von Servomotoren ist, dass ein solcher vergleichsweise viel Platz in der Kraftmesszelle der Waage benötigt, wodurch sowohl die Kraftmesszelle als auch die Waage selbst unnötig vergrössert wird.

Die WO 01/71899 offenbart einen Antrieb, bei welchem ein piezoelektrisches Element einen Antriebsfinger aufweist, der sich auf einer elliptischen Bahn bewegt, wobei der Antriebsfinger auf dieser Bahn periodisch mit einem anzutreibenden Element in Kontakt gelangt.

Die DE 199 20 436 A1 offenbart ein formschlüssiges Piezoschrittschaltwerk für lineare und rotatorische kontinuierliche Bewegungen.

Gerade bei hochempfindlichen elektronischen Waagen wird das Wägeergebnis durch elektrostatische Aufladung und Wechselwirkungen beeinflusst und sogar verändert. Die für den Antrieb der Transfermechanismen verwendeten Servomotoren enthalten elektrisch nicht leitende Getriebeteile, welche im Betrieb über Reibung elektrostatische Aufladungen erzeugen. Die entstehenden elektrostatischen Felder, jedoch auch elektromagnetische Felder konventioneller Elektromotoren reichen aus, um das Wägeergebnis, insbesondere von hochempfindlichen Waagen zu beeinflussen.

Die bekannten Kalibriergewichtsanordnungen weisen fast immer relativ grosse Antriebe auf. Es werden jedoch in zunehmenden Masse Wägemodule bekannt, die Kraftmesszellen geringer Ausdehnung vorwiegend in der Ebene orthogonal zur Lastrichtung aufweisen. Diese werden für die Erfassung kleiner Gewichte bei einer geforderten relativ hohen Messgenauigkeit eingesetzt. Sie sind insbesondere auch dazu geeignet in einem Verbund von Wägemodulen beziehungsweise Kraftmesszellen in Anlagen für die Produktion zur Bestimmung der Masse gleichgearteter Wägegüter, wie die Überprüfung von kleinen, relativ teueren Teilen, zum Beispiel in Abfüll- und Verpackungsmaschinen für Tabletten, Kapseln, Ampullen, etc. in der Pharmaindustrie, oder bei der Kontrolle von Kugellagern eingesetzt zu werden.

Eine Verbesserung der Kalibriergewichtsanordnung erfordert somit insbesondere eine Optimierung und Miniaturisierung des Antriebs für den Transfermechanismus. Der Antrieb muss sehr klein, kompakt und flexibel einsetzbar sein.

Gelöst wird diese Aufgabe durch ein Wägemodul mit einer Kalibriergewichtsanordnung gemäss den Merkmalen des Anspruchs 1 und einer Wägevorrichtung gemäss Anspruch 16.

Ein Wägemodul ist zum Einbau in eine Aufnahmestruktur mit mehreren gleichgearteten Wägemodulen geeignet. In der Aufnahmestruktur ist jedes Wägemodul in einem Bauraum angeordnet, dessen Ausdehnung in einer Ebene orthogonal zur Lastrichtung durch die Bauräume benachbarter Kraftmesszellen begrenzt ist und/oder der grössten Ausdehnung der zugeordneten Kraftmesszelle in dieser Ebene entspricht. Das Wägemodul weist jeweils eine oberhalb der Kraftmesszelle und unterhalb der Kraftmesszelle angeordnete Parallelführungsmembran auf, welche jeweils mit einem die Kraftmesszelle in Lastrichtung durchdringenden Kraftübertragungsgestänge, an dessen oberem Ende der Lastaufnehmer angebracht ist, verbunden ist. Das Wägemodul weist eine Kalibriergewichtsanordnung mit mindestens einem mit der Kraftmesszelle koppelbaren Kalibriergewicht, einen Antrieb und einen Transfermechanismus zur geführten Bewegung des Kalibriergewichts auf. Der Antrieb umfasst einen mit dem Transfermechanismus zusammenwirkenden Aktuator und mindestens ein den Aktuator antreibendes piezoelektrisches Element. Der Aktuator besitzt mindestens zwei Elemente, die mittels eines während des Vorschubs des Hebeelements in einer Richtung wiederholt erfolgenden und sich wieder lösenden Reibschlusses miteinander in Wechselwirkung stehen.

Als Aktuator sollen im vorliegenden Zusammenhang die eine Bewegung ausführenden Elemente des Antriebs verstanden werden, wobei häufig durch das Zusammenwirken von mindestens zwei Elementen eine hinsichtlich Art und Richtung gewünschte Bewegung erfolgt.

Eine solche Kalibriergewichtsanordnung, die mit einem ein piezoelektrisches Element aufweisenden Antrieb ausgestattet ist, hat den Vorteil, dass wenig Platzbedarf für das Anbringen des Antriebs an derselben vonnöten ist. Der Antrieb ist klein und kompakt und kann daher an beliebiger Stelle untergebracht sein. Ein weiterer Vorteil besteht darin, dass elektrostatische Aufladungen des Antriebs beziehungsweise von Teilen desselben vermieden werden. Ferner weist der Antrieb keine magnetischen oder magnetisierbaren Teile auf, die in einer nach dem Prinzip der elektromagnetischen Kraftkompensation arbeitenden Kraftmesszelle einer Waage störend sein könnten.

Der Transfermechanismus der Kalibriergewichtsanordnung weist ein Hebeelement, eine Kalibriergewichtsauflage und eine Führungsvorrichtung auf. Dadurch wird eine geführte Bewegung, insbesondere eine Vertikalbewegung, der Kalibriergewichtsauflage und damit auch des Kalibriergewichts bewirkt, so dass das Kalibriergewicht im Falle einer Kalibrierung in Kraftkontakt mit der Kraftübertragungsvorrichtung der Kraftmesszelle gebracht werden kann. Nach erfolgreicher Kalibrierung muss dieser Kraftkontakt wieder gelöst und der Transfermechanismus wieder in seine Ruheposition gebracht werden. Diese Aufgabe wird durch die besonders vorteilhafte Wirkung des Antriebs gelöst, denn die Bewegungsrichtung ist bei dieser Art von Antrieb umkehrbar, das heisst die Aufwärts- und die Abwärtsbewegung wird von denselben Elementen bewerkstelligt.

Ein weiterer Vorteil des Antriebs ist das einfache Ansteuern eines erwünschten Geschwindigkeitsprofils für die Bewegung eines Kalibriergewichts, welches mittels des Transfermechanismus in seine Kalibrierposition gebracht werden soll oder von dieser wieder entfernt werden soll. Es ist vorteilhaft, wenn eine Übergabe eines Kalibriergewichts, das heisst wenn dieses in Kraftkontakt mit der Kraftübertragungsvorrichtung gelangt, mit möglichst geringer Geschwindigkeit ausgeführt wird, damit Erschütterungen weitestgehend vermieden werden und ausserdem eine genaue Positionierung des Kalibriergewichts auf dem mit der Kraftübertragungsvorrichtung verbundenen Kalibriergewichtsträger ermöglicht wird.

Eine weitere Besonderheit besteht darin, dass die in den meisten Fällen vertikale Position der Kalibriergewichtsauflage im stromlosen Zustand des Antriebs durch Selbsthemmung des Antriebs fixiert ist.

In einer vorteilhaften Ausgestaltung umfasst der Antrieb einen piezoelektrischen Linearmotor, der mindestens ein piezoelektrisches Element und ein Vorschubelement aufweist. Dabei kann die Kalibriergewichtsauflage direkt auf dem Vorschubelement des Linearmotors angeordnet sein oder dessen Kraft kann über ein zwischengeschaltetes Umlenkelement, beispielsweise einen Hebel auf die Kalibriergewichtsauflage wirken.

Eine weitere mögliche Ausgestaltung der Kalibriergewichtsanordnung besteht darin, dass der Antrieb einen rotatorischen piezoelektrischen Motor, insbesondere einen Wanderwellenmotor oder einen mit einem ringförmigen Piezoelement versehenen Motor, umfasst, welcher eine Welle aufweist, auf der das Hebeelement mittels einer in die Welle integrierten Spindel eine Vertikalbewegung ausführt.

In einer Weiterbildung des erfindungsgemässen Gegenstandes kann der Antrieb eine Sensorfunktionalität zur Funktionskontrolle des Transfermechanismus aufweisen. Die Überwachung des Stroms zur Aktivierung des piezoelektrischen Elements oder die der Induktivität des Regelkreises kann beispielsweise dazu herangezogen werden, die Position des Hebeelements beziehungsweise des Kalibriergewichts festzustellen.

In einer bevorzugten Ausführungsform weist das piezoelektrische Element des Antriebs der Kalibriergewichtsanordnung einen Antriebsfinger auf, der sich auf einer elliptischen Bahn bewegt, wobei der Antriebsfinger auf dieser Bahn periodisch mit einem Antriebsrad in Kontakt im Sinne einer reibschlüssigen oder formschlüssigen Verbindung gelangen kann. Ein solcher piezoelektrischer Antrieb ist beispielsweise in der WO 01/71899 offenbart. Der Antriebsfinger bringt das Antriebsrad sowie eine mit einem Aussengewinde versehene Welle zur Rotation, wobei entlang der Welle eine mit einem Innengewinde versehene Führungsplattform verschiebbar ist. Der Antriebsfinger kann auf seiner elliptischen Bahn jedoch auch direkt auf das Hebeelement oder die Kalibriergewichtsauflage wirken, d.h. diese direkt durch periodisch erfolgenden reibschlüssigen oder formschlüssigen Kontakt bewegen.

Es sind verschiedenste Ausgestaltungen für das Hebeelement einer Kalibriergewichtsanordnung denkbar. Beispielsweise ist das Hebeelement des Transfermechanismus als Excenter oder als sich paarweise gegeneinander verschiebende Keile ausgestaltet. Das Hebeelement des Transfermechanismus kann allerdings auch als mindestens ein Kniehebelelement ausgebildet sein.

Infolge der unerwünschten Wärmeentwicklung des Antriebs ist der Antrieb in einer Aussparung in der Grundplatte, auf welcher die Kraftübertragungsvorrichtung montiert ist, angeordnet, wobei die Grundplatte im Bereich der Aussparung eine geringere Dicke aufweisen kann, worin eine Öffnung für den Durchtritt mindestens eines Teils des Hebeelements, beispielsweise eine Welle, die in der Öffnung gelagert sein kann, angeordnet ist. Die überschüssige Wärme wird somit über die Grundplatte und gegebenenfalls das Gehäuse abtransportiert.

Antriebe, die ein piezoelektrisches Element aufweisen sind aufgrund des geringen Platzbedarfs besonders dazu geeignet, in einer Kalibriergewichtsanordnung von Wägemodulen, beziehungsweise Kraftmesszellen geringer Ausdehnung in der Ebene vorwiegend orthogonal zur Lastrichtung aufweisen, eingesetzt zu werden. Sind diese Wägemodule beziehungsweise Kraftmesszellen in einer Wägevorrichtung beziehungsweise in einem Verbund von gleichgearteten Wägemodulen angeordnet, treiben die piezoelektrischen Antriebselemente die Hebeelemente in den Transfermechanismen der jeweiligen Kalibriergewichtsanordnungen einzelner Wägemodule an. Dabei wird die Kraftübertragungsvorrichtung jeder Kraftmesszelle individuell mit einem jeweiligen Kalibriergewicht gekoppelt. Dies ist besonders dann nutzbringend, wenn nicht sämtliche Kraftmesszellen des Verbunds von Wägemodulen kalibriert werden müssen, sondern nur einzelne davon. Eine solche Wägevorrichtung weist mindestens zwei Kraftmesszellen beziehungsweise Wägemodule auf. Insbesondere sind jedoch mehrere, beispielsweise vier, sechs, acht neun oder noch mehr Wägemodule in einer zweidimensionalen Matrix angeordnet, um gleichgeartete Wägegüter verwiegen zu können.

In besonders vorteilhafter Ausgestaltung sind der Antrieb und der Transfermechanismus unterhalb oder oberhalb der jeweiligen Kraftmesszelle innerhalb deren Bauraum angeordnet.

Ein ein piezoelektrisches Element aufweisender Antrieb könnte selbstverständlich in einem Verbund von Wägemodulen zur gleichzeitigen Kopplung von mehreren Kalibriergewichten an den jeweiligen Kraftmesszellen von mindestens zwei Wägemodulen, beziehungsweise der Entkopplung derselben, verwendet werden. Der Verbund von Wägemodulen beinhaltet mindestens einen Transfermechanismus und mindestens je ein, einem jeden Wägemodul zugeordnetes Kalibriergewicht, welches mit dem Kalibriergewichtsträger des zugeordneten Wägemoduls koppelbar beziehungsweise von diesem entkoppelbar ist. Der mindestens eine Transfermechanismus weist miteinander verbundene Kalibriergewichtsauflagen für die Kalibriergewichte von mindestens zwei zugeordneten Wägemodulen auf.

Es sind Kalibriergewichtsanordnungen mit einem oder mehreren Kalibriergewichten zur Kopplung mit einer Kraftübertragungsvorrichtung mittels eines Transfermechanismus realisierbar. Diese Variante der nacheinander aufleg- und wieder abhebbar angeordneten Kalibriergewichte eignet sich vor allem dazu, eine Linearitätsmessung durchzuführen.

Die Anordnung einer Kalibriergewichtsanordnung in Bezug auf eine Kraftübertragungsvorrichtung einer elektronischen Waage sowie mehrere Ausführungsformen der Kalibriergewichtsanordnung sind in den Figuren dargestellt, welche im Folgenden beschrieben werden. Es zeigen:
- Fig. 1: eine perspektivische Darstellung einer Aufnahmestruktur mit zwei Wägemodulen mit oberhalb der Kraftmesszelle und unterhalb der Kraftmesszelle angeordneten Parallelführungsmembranen und der Bauraum eines Wägemoduls;
- Fig. 2: eine perspektivische Darstellung eines Wägemoduls mit einer Kraftmesszelle mit geringen Abmessungen in der Ebene senkrecht zur Lastrichtung, mit einer Kalibriergewichtsanordnung für ein Kalibriergewicht;
- Fig. 3: eine perspektivische Darstellung eines Wägemoduls mit einer Kraftmesszelle mit geringen Abmessungen in der Ebene senkrecht zur Lastrichtung, mit einer Kalibriergewichtsanordnung für zwei Kalibriergewichte;
- Fig. 4: eine vereinfachte, schematische Seitenansicht eines Transfermechanismus mit einem als Kniehebelelement gestalteten Hebeelement;
- Fig. 5: eine vereinfachte, schematische Seitenansicht eines weiteren Transfermechanismus mit einem als Kniehebelelement gestalteten Hebeelement;
- Fig. 6: eine vereinfachte Schnittansicht als Ausschnittvergrösserung einer Grundplatte mit darin angeordnetem Aktuator.

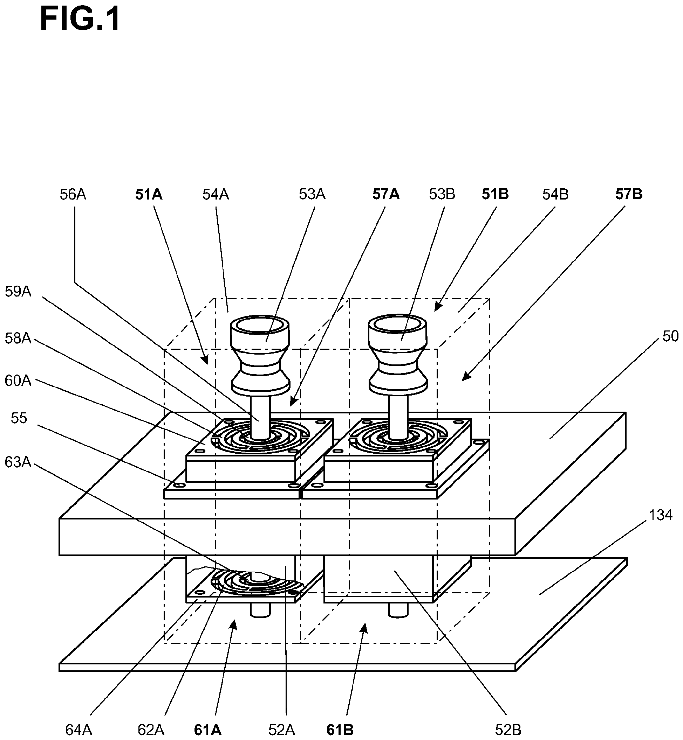

Antriebe, die ein piezoelektrisches Element aufweisen sind aufgrund des geringen Platzbedarfs besonders dazu geeignet, in einer Kalibriergewichtsanordnung für Wägemodule, die Kraftmesszellen geringer Ausdehnung in der Ebene orthogonal zur Lastrichtung aufweisen, eingesetzt zu werden. Sie treiben beispielsweise in einem Verbund von Wägemodulen die Hebeelemente in den Transfermechanismen der Kalibriergewichtsanordnungen einzelner Kraftmesszellen an. Dabei wird die Kraftübertragungsvorrichtung jeder Kraftmesszelle individuell mit einem jeweiligen Kalibriergewicht gekoppelt. Die Anordnung solcher klein dimensionierter Kraftmesszellen in einem Verbund wird anhand einer in Figur 1 dargestellten Ausführungsform beispielhaft gezeigt und im Folgenden beschrieben.

In Figur 1 ist die perspektivische Darstellung einer Aufnahmestruktur 50 mit zwei erfindungsgemässen Wägemodulen 51A, 51B dargestellt, welche eine Vorrichtung zum Wiegen gleichgearteter Wägegüter bilden. Jedes Wägemodul 51A, 51B weist eine Kraftmesszelle 52A, 52B und je einen zugeordneten Lastaufnehmer 53A, 53B auf. Jedes dieser Wägemodule 51A, 51B ist in einem Bauraum 54A, 54B angeordnet. Die Ausdehnung des jeweiligen Bauraumes in der Ebene orthogonal zur Lastrichtung wird durch die Bauräume benachbarter Kraftmesszellen begrenzt und/oder entspricht der grössten Ausdehnung der zugeordneten Kraftmesszelle 52A, 52B in dieser Ebene im entsprechenden Bauraum 54A, 54B.

Die Ausdehnung in der Lastrichtung ist beispielsweise durch einen mit der Aufnahmestruktur fest verbundenen Gehäuseboden, beziehungsweise einer Grundplatte 134 begrenzt. Die Begrenzung der Bauräume 54A, 54B entgegen der Lastrichtung bilden beispielsweise die Oberkanten der Lastaufnehmer 53A, 53B, da sich beispielsweise oberhalb der Lastaufnehmer 53A, 53B üblicherweise der Operationsraum einer nicht dargestellten Beschickungsanlage befindet.

Das Wägemodul 51A ist durch Befestigungsmittel 55, beispielsweise Schrauben mit der Aufnahmestruktur 50 starr verbunden. Die Kraftmesszelle 52A des Wägemoduls 51A weist eine nicht dargestellte, im Innern der Kraftmesszelle 52A angeordnete Spule auf, die mit einem Kraftübertragungsgestänge 56A verbunden ist, welches die Kraftmesszelle 52A in Lastrichtung durchdringt. Am oberen Ende des Kraftübertragungsgestänges 56A ist der Lastaufnehmer 53A angebracht.

Zwischen dem Lastaufnehmer 53A und der Kraftmesszelle 52A ist eine obere Parallelführungsmembran 57A angeordnet, deren oberer Parallellenker 58A den oberen beweglichen Parallelschenkel 59A in vorgegebenem Führungsabstand mit dem oberen feststehenden Parallelschenkel 60A verbindet.

Mit Führungsabstand wird der direkte Abstand zwischen dem beweglichen Parallelschenkel 59A und dem feststehenden Parallelschenkel 60A der Parallelführungsmembran 57A bezeichnet. Dabei ist es unerheblich wie der Parallellenker 58A, welcher die beiden Schenkel verbindet, ausgestaltet ist.

Der Parallellenker 58A ist aber so ausgestaltet, dass dessen Wirklänge wesentlich grösser ist als die Führungslänge der Parallelführungsmembran 57A. Die Wirklänge wird als die tatsächliche gestreckte Länge beziehungsweise die Länge der biegespannungsneutralen Faser des Parallellenkers 58A inklusive den dazu gehörenden Verbindungsstellen mit den Parallelschenkeln 59A, 60A definiert.

Der obere bewegliche Parallelschenkel 59A ist mit dem Kraftübertragungsgestänge 56A verbunden und der obere feststehende Parallelschenkel 60A ist an der Kraftmesszelle 52A festgelegt. Desgleichen ist auf der, dem Lastaufnehmer 53A abgewandten Seite der Kraftmesszelle 52A eine untere Parallelführungsmembran 61A angeordnet, deren unterer Parallellenker 62A den unteren beweglichen Parallelschenkel 63A mit dem unteren feststehenden Parallelschenkel 64A verbindet, wie es die gebrochen dargestellte Kraftmesszelle 52A in Figur 1 zeigt. Auch der untere bewegliche Parallelschenkel 63A ist mit dem Kraftübertragungsgestänge 56A verbunden und auch der untere feststehende Parallelschenkel 64A ist an der Kraftmesszelle 52A festgelegt.

Die Wirklänge des oberen Parallellenkers 58A sollte gegenüber der Wirklänge des unteren Parallellenkers 62A identisch sein, da sonst eine präzise Parallelführung des Kraftübertragungsgestänges 56A kaum möglich ist.

Die Beschreibung des Wägemoduls 51A gilt sinngemäss auch für das Wägemodul 51B, dessen obere Parallelführungsmembran 57B und untere Parallelführungsmembran 61B.

Damit nebeneinander liegende Wägemodule 51A, 51B in einer Vorrichtung zum Wiegen gleichgearteter Wägegüter problemlos ausgetauscht werden können, darf kein Teil des jeweiligen Wägemoduls 51A über die Grenzen seines Bauraumes 54A hinausragen. Deshalb muss der bewegliche Parallelschenkel 59A innerhalb des Bauraums 54A angeordnet sein. Im äussersten Falle kann die Aussenkontur des beweglichen Parallelschenkels 59A, des Parallellenkers 58A oder des feststehenden Parallelschenkels 60A der Aussenkontur der Bauraum- Querschnittfläche orthogonal zur Lastrichtung entsprechen.

Selbstverständlich ist diese Anordnung nicht auf zwei Wägemodule 51A, 51B beschränkt. Es können beliebig viele Wägemodule in einer flächigen Anordnung hinter- und nebeneinander angeordnet werden, wobei jeweils zwei benachbarte Kraftmesszellen in der dargestellten Weise gruppiert sind.

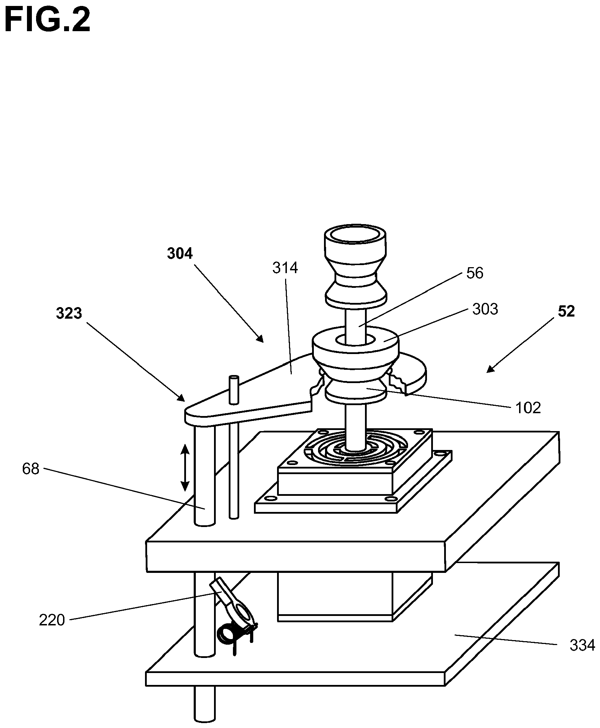

In der Figur 2 ist ein Wägemodul mit einer klein dimensionierte Kraftmesszelle 52, das heisst einer Kraftmesszelle 52 mit geringen Abmessungen vorwiegend in der Ebene senkrecht zur Lastrichtung dargestellt. Eine solche Kraftmesszelle 52 kann beispielsweise in der Ebene senkrecht zur Lastrichtung ein quadratisches Profil aufweisen, wobei deren Kantenlänge wenige Zentimeter beträgt. Selbstverständlich sind auch runde oder rechteckige Profile denkbar. In Figur 2 ist die Kraftmesszelle 52 mit einer speziell dafür konstruierten Kalibriergewichtsanordnung 304 gezeigt. Diese Kalibriergewichtsanordnung 304 erlaubt beispielsweise in einem Verbund von Kraftmesszellen ein individuelles Kalibrieren jeder einzelnen Kraftübertragungsvorrichtung dieser Kraftmesszellen. Die Kalibriergewichtsanordnung 304 zeichnet sich dadurch aus, dass ein Antriebsfinger 220 direkt mittels periodisch erfolgendem und sich wieder lösendem Reibschluss mit einer Vorschubstange 68 als Teil des Hebeelements 323 und als Teil des Aktuators dieses nach oben beziehungsweise nach unten bewegt.

Der Transfermechanismus weist eine plattenförmige Kalibriergewichtauflage 314 auf. Das ringförmige Kalibriergewicht 303 wird durch den Transfermechanismus von der Ruheposition in die Kalibrierposition und von der Kalibrierposition wieder in die Ruheposition transferiert.

Am Kraftübertragungsgestänge 56 ist mindestens ein hier ebenfalls ringförmiger Kalibriergewichtsträger 102 ausgebildet beziehungsweise befestigt, mit welchem das Kalibriergewicht 303 in der Kalibrierposition, wie sie die Figur 2 zeigt, in Kraftkontakt steht. Idealerweise verfügen das Kalibriergewicht 303 und/oder der Kalibriergewichtsträger 102 über Positionierungsmittel, die das Kalibriergewicht 303 gegenüber der Kalibriergewichtaufnahme 304, beziehungsweise gegenüber dem Transfermechanismus positionieren.

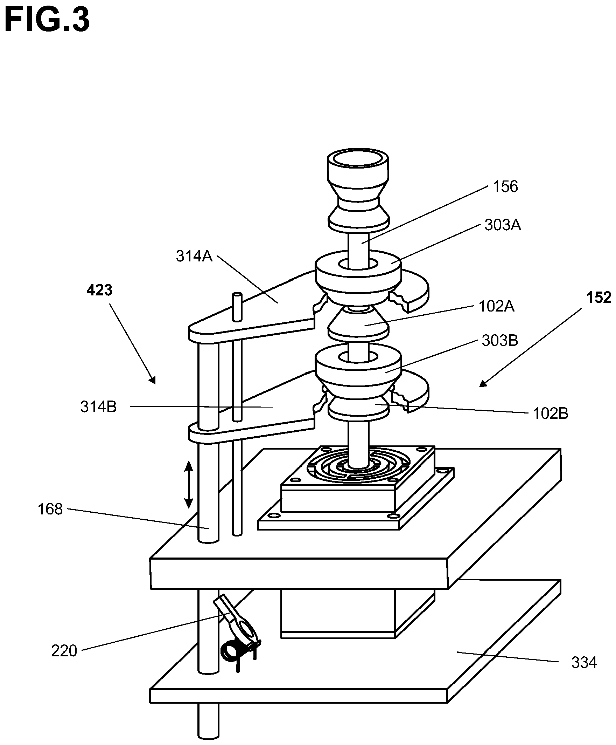

In der Figur 3 ist gezeigt, dass sich die anhand der Figur 2 beschriebene Kalibriergewichtsanordnung auch für das Anheben und Absenken von zwei Kalibriergewichten 303A, 303B eignet. Dies ist besonders nützlich, wenn Linearitätsmessungen durchgeführt werden sollen. Dabei müssen die beiden Kalibriergewichte 303A, 303B nicht notwendigerweise die gleiche Masse besitzen. Die Kalibriergewichtsanordnung der Kraftmesszelle 152 weist zwei plattenförmige Kalibriergewichtauflagen 314A, 314B auf. Wie in der Figur 3 zu sehen ist, liegt das Kalibriergewicht 303B auf dem Kalibriergewichtsträger 102B auf, befindet sich also in der Kalibrierposition und das Kalibriergewicht 303A befindet sich in Kontakt mit der Kalibriergewichtsauflage 314A. Durch weiteres Absenken der beiden plattenförmigen Kalibriergewichtauflagen 314A, 314B kommt auch das Kalibriergewicht 303A in Kontakt mit seinem Kalibriergewichtsträger 102A.

Dem Anheben und Absenken des Hebeelements 423 dient das Zusammenwirken des auf der Grundplatte 334 angebrachten piezoelektrischen Antriebs und der Vorschubstange 168, wobei - einen Aktuator bildend - der Antriebsfinger 220 in einen periodischen beziehungsweise wiederholt pulsförmigen Reibschluss mit der Vorschubstange 168 gelangt. Die Bewegungsrichtung ist bei dieser Art von Antrieb umkehrbar, das heisst die Aufwärts- und die Abwärtsbewegung wird von denselben Elementen bewerkstelligt.

Es sei an dieser Stelle erwähnt, dass abweichend von den Figuren 2 und 3 der Antrieb sowie der Transfermechanismus auch unterhalb oder oberhalb der Kraftmesszelle innerhalb des Bauraums 54A, 54B, wie er anhand der Figur 1 definiert ist, angeordnet sein kann. Beispielsweise kann in einer Ausführungsform der Kraftmesszelle 52A aus der Figur 1 das nach unten verlängerte Kraftübertragungsgestänge 56A mit einem ringförmigen Kalibriergewichtsträger ausgestattet sein. Ein ebenfalls ringförmiges Kalibriergewicht ist in der Kalibrierposition in Kontakt mit dem Kalibriergewichtsträger beziehungsweise liegt in der Ruheposition auf einer etwa gabelförmigen Kalibriergewichtsauflage auf, welche beispielsweise direkt auf dem Vorschubelement eines piezoelektrischen Antriebs angeordnet ist.

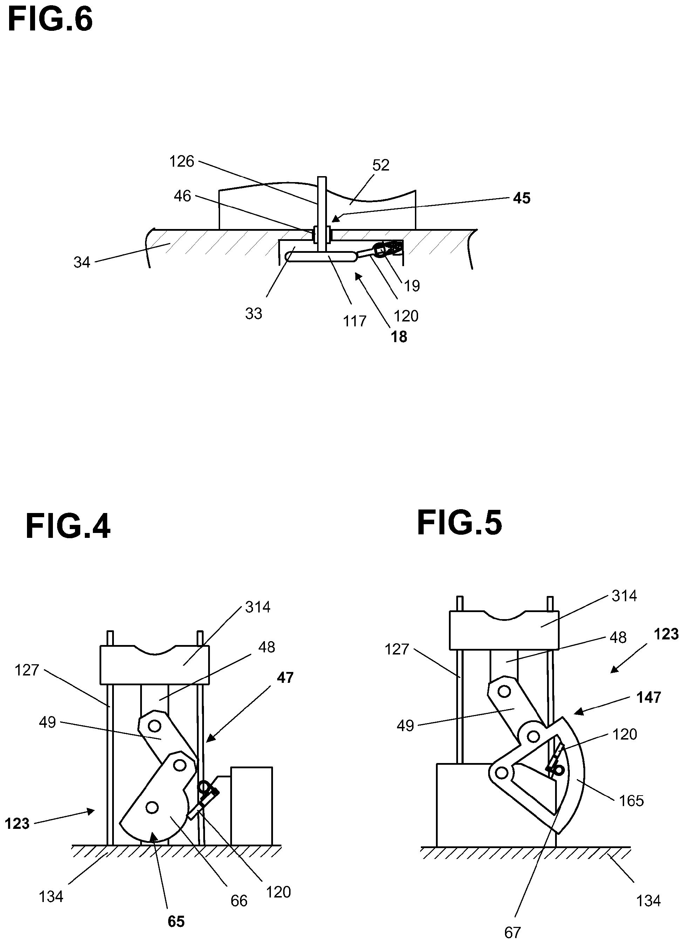

Es sind verschiedenste Ausgestaltungen für das Hebeelement einer Kalibriergewichtsanordnung denkbar, von denen gegen einander bewegte Keile oder Excenter, auf welchen jeweils eine Kalibriergewichtsauflage, sei dies mit einer Führungsplattform oder ohne eine solche, aus dem Stand der Technik bekannt sind und hier lediglich erwähnt sein sollen. Die Figuren 4 und 5 zeigen zwei weitere Ausführungsformen von Hebeelementen 123 in Form von verschiedenen Kniehebelelementen 47, 147, an welchen der Antriebsfinger 120 des ein piezoelektrisches Element aufweisenden Antriebs, direkt angreift.

In der Figur 4 ist in der Seitenansicht stark schematisiert eine Kalibriergewichtsauflage 314, die an zwei Führungsstiften 127 in vertikaler Richtung bewegbar ist, dargestellt. Das Hebeelement 123 weist ein scheibenförmiges Kniehebelelement 47 auf, dessen erstes Teil 49 mit einem an der Kalibriergewichtsauflage 314 angeordneten Dorn 48 gelenkig verbunden ist. Das erste Teil 49 des Kniehebelelements 47 ist mit einem zweiten Teil 65 ebenfalls gelenkig verbunden. Letzteres ist mit einer Unterlage, beispielsweise der Grundplatte 134 wiederum über ein Gelenk verbunden. Das zweite Teil 65 weist einen Bereich mit einer halbkreisförmigen Ausbuchtung 66 auf, an deren Aussenfläche ein Antriebsfinger 120 eines bereits oben beschriebenen Antriebs angreift. Dadurch bewegt sich die halbkreisförmige Ausbuchtung 66 entlang dem Angriffpunkt des Antriebsfingers 120, das Kniehebelelement 47 wird gestreckt und gebeugt, wodurch sich die Kalibriergewichtsauflage 314 in vertikaler Richtung bewegt.

Die Figur 5 zeigt in analoger Darstellung eine weitere Ausführungsform eines Kniehebelelements 147. Bei diesem ist das zweite Teil 165 des Kniehebelelements 147 als scheibenförmiger Rahmen mit einer teilkreisförmigen Innenfläche 67 ausgestaltet. Der Antriebsfinger 120 greift an der Innenseite des Rahmens an und die teilkreisförmige Innenfläche bewegt sich entlang dem Angriffpunkt des Antriebsfingers 120, wodurch das Kniehebelelement 147 gestreckt und gebeugt wird und sich die Kalibriergewichtsauflage 314 in vertikaler Richtung bewegt.

Da ein ein piezoelektrisches Element aufweisender Antrieb im Betrieb Wärme erzeugt, welche im Kraftmesszellenraum einer Waage unerwünscht ist, wird der Antrieb in einer Ausgestaltung der Kraftmesszelle, wie die Figur 6 stark schematisiert in einer Ausschnittvergrösserung der Grundpaltte 34 als Schnittzeichnung zeigt, in eine Aussparung 33 in der Grundplatte 134, auf welcher die Kraftübertragungsvorrichtung angeordnet ist, installiert. Zwischen dem Antriebsrad 117 des Aktuators und der Führungsplattform 16 verbleibt noch ein Teil der Grundplatte 34 stehen, welcher eine Öffnung 45 für den Durchtritt der Welle 126 besitzt. Innerhalb dieser Öffnung 45 ist die Welle 126 über ein Lager 46 geführt. Die überschüssige Wärme wird somit über die Grundplatte 34 und gegebenenfalls ein mit dieser verbundenes Gehäuse abtransportiert. Ein weiterer Vorteil dieser Anordnung besteht darin, dass möglicherweise vom Reibschluss zwischen Antriebsfinger 120 und Antriebsrad 117 verursachter Abrieb bereits ausserhalb des Kraftmesszellenraums anfällt und daher nicht zur Verschmutzung des Letzteren beiträgt. Eine weitere Variante sieht vor, dass der Antrieb in einer nach oben offenen Aussparung der Grundplatte untergebracht ist.

Es versteht sich von selbst, dass eine Vielzahl von Antrieben, die mindestens ein piezoelektrisches Antriebselement aufweisen hier Verwendung finden können. Es sei hier beispielhaft auf einen Wanderwellenmotor, einen Ultraschallmotor mit ringförmigem piezoelektrischem Antriebselement, einen piezoelektrischen Liearantrieb oder einen so genannten Caterpillar Linearantrieb verwiesen.

Da der ein piezoelektrisches Element aufweisende Antrieb selbsthemmend ist, das heisst im stromlosen Zustand das Vorschubelement stets in seiner aktuellen Position gehalten wird, ist die jeweilige Position der Kalibriergewichtsauflage stabil ohne weiteres Zutun.

Insbesondere kann der Antrieb eine Sensorfunktionalität zur Funktionskontrolle des Transfermechanismus aufweisen. Die Überwachung des Stroms zur Aktivierung des piezoelektrischen Elements oder die der Induktivität des Regelkreises kann beispielsweise dazu herangezogen werden, die Position des Hebeelements beziehungsweise des Kalibriergewichts festzustellen.

Kalibrieranordnungen der hier vorgestellten Art können sowohl in hochauflösenden als auch in weniger hochauflösenden Waagen eingesetzt werden.

### Bezugszeichenliste

- 102: Kalibriergewichtsträger
- 303, 303A, 303B: Kalibriergewicht
- 304: Kalibriergewichtsanordnung
- 314, 314A, 314B: Kalibriergewichtsauflage
- 117: Antriebsrad
- 18: Aktuator
- 19: Piezoelektrisches Element
- 120: Antriebsfinger
- 123,323,423: Hebeelement
- 126: Welle
- 127: Führungsstift
- 33: Aussparung
- 34, 134: Grundplatte
- 45: Öffnung in der Grundplatte
- 46: Lager
- 47, 147: Kniehebelelement
- 48: Dorn
- 49: Erstes Teil des Kniehebelelement
- 50: Aufnahmestruktur
- 51A, 51B: Wägemodul
- 52, 52A, 52B, 152: Kraftmesszelle
- 53A, 53B: Lastaufnehmer
- 54A, 54B: Bauraum
- 55: Befestigungsmittel
- 56, 56A, 156: Kraftübertragungsgestänge
- 57A, 57B: obere Parallelführungsmembran
- 58A: oberer Parallellenker
- 59A: oberer beweglicher Parallelschenkel
- 60A: oberer feststehender Parallelschenkel
- 61A,: 61B untere Parallelführungsmembran
- 62A: unterer Parallellenker
- 63A: unterer beweglicher Parallelschenkel
- 64A: unterer feststehender Parallelschenkel
- 65, 165: Zweites Teil des Kniehebelelements
- 66: Bereich mit halbkreisförmiger Ausbuchtung
- 67: Teilkreisförmige Innenfläche
- 68, 168: Vorschubstange

## Patentansprüche

1. Wägemodul (51A, 51B) mit einer Kraftmesszelle (52, 52A, 52B, 152) geeignet zum Einbau in eine Aufnahmestruktur mit mehreren gleichgearteten Wägemodulen (51A, 51B), in welcher Aufnahmestruktur jedes Wägemodul (51A, 51B) in einem Bauraum (54A, 54B) angeordnet ist, dessen Ausdehnung in einer Ebene orthogonal zur Lastrichtung durch die Bauräume (54A, 54B) benachbarter Kraftmesszellen (52, 52A, 52B, 152) begrenzt ist und/oder der grössten Ausdehnung der zugeordneten Kraftmesszelle (52, 52A, 52B, 152) in dieser Ebene entspricht, wobei das Wägemodul (51A, 51B) jeweils eine oberhalb der Kraftmesszelle (52, 52A, 52B, 152) und unterhalb der Kraftmesszelle (52, 52A, 52B, 152) angeordnete Parallelführungsmembran (57A, 57B) aufweist, welche jeweils mit einem die Kraftmesszelle (52, 52A, 52B, 152) in Lastrichtung durchdringenden Kraftübertragungsgestänge (56, 56A, 156), an dessen oberem Ende ein Lastaufnehmer (53A, 53B) angebracht ist, verbunden ist, und wobei das Wägemodul (51A, 51B) eine Kalibriergewichtsanordnung (304) mit mindestens einem mit der Kraftmesszelle (52, 52A, 52B, 152) koppelbaren Kalibriergewicht (303, 303A, 303B) aufweist, wobei die Kalibriergewichtsanordnung (304) einen Antrieb und einen ein Hebeelement (123, 423), eine Kalibriergewichtsauflage (314, 314A, 314B) und eine Führungsvorrichtung aufweisenden Transfermechanismus zur geführten Bewegung des Kalibriergewichts (303, 303A, 303B) umfasst, wobei der Antrieb einen Aktuator (18) und mindestens ein den Aktuator (18) antreibendes piezoelektrisches Element (19) aufweist, und wobei der Aktuator (18) mittels eines während des Vorschubs des Hebeelements (123, 423) in einer Richtung wiederholt erfolgenden und sich wieder lösenden Reibschlusses mit dem Hebeelement (123, 423) zusammenwirkt.

2. Wägemodul (51A, 51B) nach Anspruch 1, **dadurch gekennzeichnet, dass** die aktuelle Position der Kalibriergewichtsauflage (314, 314A, 314B) im stromlosen Zustand des Antriebs durch Selbsthemmung des Antriebs fixierbar ist.

3. Wägemodul (51A, 51B) nach Anspruch 1 oder 2, **dadurch gekennzeichnet, dass** der piezoelektrische Antrieb eine integrierte Sensorfunktionalität zur Funktions- und/oder Positionskontrolle des Transfermechanismus aufweist.

4. Wägemodul (51A, 51B) nach einem der Ansprüche 1 bis 3, **dadurch gekennzeichnet, dass** der Antrieb einen piezoelektrischen Linearmotor umfasst, der mindestens ein piezoelektrisches Element und ein Vorschubelement aufweist, wobei auf dem Vorschubelement des Linearmotors direkt die Kalibriergewichtsauflage (314, 314A, 314B) angeordnet ist.

5. Wägemodul (51A, 51B) nach einem der Ansprüche 1 bis 3, **dadurch gekennzeichnet, dass** der Antrieb einen rotatorischen piezoelektrischen Motor, insbesondere einen Wanderwellenmotor oder einen mit einem ringförmigen Piezoelement versehenen Motor, umfasst, welcher eine Welle aufweist, auf der das Hebeelement mittels einer in die Welle integrierten Spindel eine Vertikalbewegung ausführt.

6. Wägemodul (51A, 51B) nach einem der Ansprüche 1 bis 3, **dadurch gekennzeichnet, dass** der Aktuator einen vom piezoelektrischen Element (19) auf einer elliptischen Bahn bewegten Antriebsfinger (120) und ein Antriebsrad (117) aufweist, wobei der Antriebsfinger (120) auf dieser Bahn periodisch mit dem Antriebsrad (117) in Kontakt im Sinne einer reibschlüssigen oder formschlüssigen Verbindung gelangen kann, wodurch eine mit einem Aussengewinde versehene Welle (26, 126) zur Rotation bringbar ist, entlang welcher Welle (126) eine mit einem Innengewinde versehene Führungsplattform verschiebbar ist.

7. Wägemodul (51A, 51B) nach einem der Ansprüche 1 bis 3, **dadurch gekennzeichnet, dass** der Transfermechanismus ein Hebeelement (123, 423), aufweist und das piezoelektrische Element (19) des Antriebs einen Antriebsfinger (120) auf einer elliptischen Bahn bewegt, wobei der Antriebsfinger (120) auf dieser Bahn periodisch direkt mit dem Hebeelement (123, 323, 423) oder der Kalibriergewichtsauflage (314, 314A, 314B) in Kontakt bringbar ist.

8. Wägemodul (51A, 51B) nach einem der Ansprüche 1 bis 7, **dadurch gekennzeichnet, dass** das Hebeelement des Transfermechanismus als Excenter oder als sich paarweise gegeneinander verschiebende Keile ausgestaltet ist.

9. Wägemodul (51A, 51B) nach einem der Ansprüche 1 bis 7, **dadurch gekennzeichnet, dass** das Hebeelement (123) des Transfermechanismus als mindestens ein Kniehebelelement (47, 147) ausgebildet ist.

10. Wägemodul (51A, 51B) nach Anspruch 9, **dadurch gekennzeichnet, dass** das Kniehebelelement (47) mit einander gelenkig verbundene scheibenförmige Teile (49, 65) aufweist, wovon eines einen Bereich mit einer halbkreisförmigen Ausbuchtung (66) aufweist, an deren Aussenfläche ein Antriebsfinger (120) angreift.

11. Wägemodul (51A, 51B) nach Anspruch 9, **dadurch gekennzeichnet, dass** das Kniehebelelements (147) mit einander gelenkig verbundene scheibenförmige Teile (49, 165) aufweist, wovon eines als scheibenförmiger Rahmen mit einer teilkreisförmigen Innenfläche (67) ausgestaltet ist, an welcher ein Antriebsfinger (120) angreift.

12. Wägemodul (51A, 51B) nach einem der Ansprüche 1 bis 11, **dadurch gekennzeichnet, dass** die Kraftübertragungsvorrichtung (304) auf einer Grundplatte (34) angeordnet ist und dass der Antrieb in einer Aussparung (33) in der Grundplatte (34) angeordnet ist.

13. Wägemodul (51A, 51B) nach Anspruch 12, **dadurch gekennzeichnet, dass** die Grundplatte (34) im Bereich der Aussparung eine geringere Dicke aufweist und eine Öffnung (45) für den Durchtritt mindestens eines Teils des Hebeelements.

14. Wägemodul (51A, 51B) nach einem der Ansprüche 1 bis 13, **dadurch gekennzeichnet, dass** der Antrieb und der Transfermechanismus unterhalb oder oberhalb der jeweiligen Kraftmesszelle (52, 52A, 52B, 152) innerhalb deren Bauraum (54A, 54B) angeordnet sind.

15. Wägevorrichtung mit mindestens zwei Wägemodulen (51A, 51B) nach einem der Ansprüche 1 bis 14

16. Wägevorrichtung nach Anspruch 15, **dadurch gekennzeichnet, dass** jede Kraftmesszelle (52, 52A, 52B, 152) eine individuell betätigbare Kalibriergewichtsanordnung (304) besitzt.

17. Wägevorrichtung nach Anspruch 15 oder 16, **dadurch gekennzeichnet, dass** die Wägemodule (51A, 51B) in Form einer zweidimensionalen Matrix oder eines zweidimensionalen Arrays in der Aufnahmestruktur (50) angeordnet sind.

## Claims

1. Weighing module (51A, 51B) with a force-measuring cell (52, 52A, 52B, 152), suitably designed for installation in a receiving structure with a plurality of weighing modules (51A, 51B) of the same type, wherein within said receiving structure each weighing modules (51A, 51B) occupies a design space (54A, 54B) whose dimensions, projected into a plane that extends orthogonal to the direction of the load, are delimited by the design spaces (54A, 54B) of neighboring force-measuring cells (52, 52A, 52B, 152) and/or correspond to the largest dimension of the force-measuring cell (52, 52A, 52B, 152) in said plane, wherein each force-measuring cell (52, 52A, 52B, 152) comprises a calibration weight arrangement (304) with at least one calibration weight (303, 303A, 303B) which can be coupled to the force-measuring cell (52, 52A, 52B, 152), wherein the calibration weight arrangement (304) further comprises a drive mechanism and a transfer mechanism for the guided movement of the calibration weight (303, 303A, 303B), the transfer mechanism comprises a lifting element (123, 423), a calibration weight seat (314, 314A, 314B) and a guiding device, wherein the drive mechanism includes an actuator (18) and at least one piezoelectric element (19) driving the actuator, and wherein the actuator (18) interacts through the repeated engagement and release of a frictional contact force which occurs during the travel movement in one direction.

2. Weighing module (51A, 51B) according to claim 1, **characterized in that** a current position of the calibration weight seat (314, 314A, 314B) can be secured by self-locking of the drive mechanism when no current is flowing in the drive mechanism.

3. Weighing module (51A, 51B) according to claim 1 or 2, **characterized in that** the piezoelectric drive mechanism integrally includes a capability to function as a sensor to check the proper functioning and/or the actual position of the transfer mechanism.

4. Weighing module (51A, 51B) according to claim 1 or 3, **characterized in that** the drive mechanism comprises a piezoelectric linear motor which includes at least one piezoelectric element and a traveling element, wherein the calibration weight seat (314, 314A, 314B) is arranged directly on the traveling element of the linear motor.

5. Weighing module (51A, 51B) according to one of the claims 1 to 4, **characterized in that** the drive mechanism comprises a rotary piezoelectric motor, in particular a traveling wave motor or a motor that is equipped with a ring-shaped piezo element, which has a shaft on which the lifting element performs a vertical movement by means of a spindle which is incorporated in the shaft.

6. Weighing module (51A, 51B) according to one of the claims 1 to 3, **characterized in that** the actuator comprises a pusher finger (120) which is moved by the piezoelectric element (19) on an elliptic path, and further comprises a drive wheel (117), wherein said pusher finger (120), while moving on said path, can periodically make contact with the drive wheel (117) in the sense of a frictional or form-fitting connection., whereby a shaft (26, 126) with an external thread can be set into rotation, wherein a guide platform with an internal thread is capable of being moved along said shaft (126).

7. Weighing module (51A, 51B) according to one of the claims 1 to 3, **characterized in that** the transfer mechanism comprises a lifting element (123, 423) and the piezoelectric element (19) of the drive mechanism (120) moves a pusher finger (120) on an elliptic path, wherein said pusher finger (120), while moving on said path, can periodically be brought into direct contact with the lifting element (123, 323, 423) or with the calibration weight seat (314, 314A, 314B).

8. Weighing module (51A, 51B) according to one of the claims 1 to 7, **characterized in that** the lifting element of the transfer mechanism is configured as an eccentric or as a pair of wedges moving in opposition to each other.

9. Weighing module (51A, 51B) according to one of the claims 1 to 7, **characterized in that** the lifting element (123) of the transfer mechanism is configured as at least one knee lever element (47, 147).

10. Weighing module (51A, 51B) according to claim 9, **characterized in that** the knee lever element (47) comprises disk-shaped elements (49, 65) that are pivotally connected to each other, wherein one of said elements (49, 65) comprises a semi-circular convexity (66), whose external surface is engaged by a pusher finger (120).

11. Weighing module (51A, 51B) according to claim 9, **characterized in that** the knee lever element (147) comprises disk-shaped elements (49, 165) that are pivotally connected to each other, wherein one of said elements (49, 165) is configured as a disk-shaped frame with an internal surface profile (67) shaped as a circular arc, wherein said internal surface profile (67) is engaged by a pusher finger (120).

12. Weighing module (51A, 51B) according to one of the claims 1 to 11, **characterized in that** the force-transmitting device (304) is arranged on a base plate (34) and that the drive mechanism is arranged in a recess (33) of said base plate (34).

13. Weighing module (51A, 51B) according to claim 12, **characterized in that** in the area of the recess the base plate (34) has a reduced thickness and an opening (45) for the passage of at least a part of the lifting element.

14. Weighing module (51A, 51B) according to claim 1 to 13, **characterized in that** the drive mechanism and the transfer mechanism are arranged below or above the force-measuring cell (52, 52A, 52B, 152) within the latter's design space (54A, 54B).

15. Weighing device with at least two weighing modules (51A, 51B) according to one of the claims 1 to 14.

16. Weighing device according to claim 15, **characterized in that** each force-measuring cell (52, 52A, 52B, 152) has a calibration weight arrangement (304) that is capable of being individually actuated.

17. Weighing device according to claim 15 or 16, **characterized in that** the weighing modules (51A, 51B) are arranged in the receiving structure (50) in the form of a two-dimensional matrix or a two-dimensional array.

## Revendications

1. Module de pesage (51A, 51B) avec une cellule de mesure de force (52, 52A, 52B, 152), adapté pour être intégré dans une structure d'accueil avec plusieurs modules de pesage (51A, 51B) similaires, chaque modules de pesage (51A, 51B) dans la structure d'accueil étant installé dans un espace de construction (54A, 54B) dont l'extension dans un plan orthogonal à la direction de charge est limitée par les espaces de construction (54A, 54B) de cellules de mesure de force (52, 52A, 52B, 152) voisines et/ou correspond à l'extension la plus grande de la cellule de mesure de force (52, 52A, 52B, 152) attribuée dans ce plan, le module de pesage (51A, 51B) présentant respectivement une membrane de guidage parallèle (57A, 57B) disposée au-dessus de la cellule de mesure de force (52, 52A, 52B, 152) et en dessous de la cellule de mesure de force (52, 52A, 52B, 152), laquelle est respectivement reliée à une tringlerie de transmission de force (56, 56A, 156) traversant la cellule de mesure de force (52, 52A, 52B, 152) dans la direction de charge, à l'extrémité supérieure de laquelle est fixé un récepteur de charge (53A, 53B), et le module de pesage (51A, 51B) comportant un ensemble de poids d'étalonnage (304) avec au moins un poids d'étalonnage (303, 303A, 303B) apte à être accouplé avec la cellule de mesure de force (52, 52A, 52B, 152), l'ensemble de poids d'étalonnage (304) comprenant un entraînement ainsi qu'un mécanisme de transfert comportant un élément de levage (123, 423), un support de poids d'étalonnage (314, 314A, 314B) et un dispositif de guidage, pour le déplacement guidé du poids d'étalonnage (303, 303A, 303B), l'entraînement comportant un actionneur (18) et au moins un élément piézoélectrique (19) entraînant l'actionneur (18), l'actionneur (18) coopérant avec l'élément de levage (123, 423) au moyen d'un frottement apparaissant et disparaissant de façon répétée pendant l'avancement de l'élément de levage (123, 423) dans une direction.

2. Module de pesage (51A, 51B) selon la revendication 1, **caractérisé en ce que** la position actuelle du support de poids d'étalonnage (314, 314A, 314B) peut être fixée par blocage automatique de l'entraînement dans l'état sans courant de l'entraînement.

3. Module de pesage (51A, 51B) selon la revendication 1 ou 2, **caractérisé en ce que** l'entraînement piézoélectrique présente une fonctionnalité de capteur intégrée, destinée à contrôler le fonctionnement et/ou la position du mécanisme de transfert.

4. Module de pesage (51A, 51B) selon l'une des revendications 1 à 3, **caractérisé en ce que** l'entraînement comporte un moteur linéaire piézoélectrique, lequel présente au moins un élément piézoélectrique et un élément d'avancement, le support de poids d'étalonnage (314, 314A, 314B) étant agencé directement sur l'élément d'avancement du moteur linéaire.

5. Module de pesage (51A, 51B) selon l'une des revendications 1 à 3, **caractérisé en ce que** l'entraînement comporte un moteur piézoélectrique rotatif, en particulier un moteur à onde progressive ou un moteur doté d'un élément piézoélectrique annulaire, lequel présente un arbre sur lequel l'élément de levage effectue un déplacement vertical au moyen d'une broche intégrée dans l'arbre.

6. Module de pesage (51A, 51B) selon l'une des revendications 1 à 3, **caractérisé en ce que** l'actionneur présente un doigt d'entraînement (120) déplacé par l'élément piézoélectrique (19) sur une voie elliptique ainsi qu'une roue d'entraînement (117), le doigt d'entraînement (120) pouvant se mettre en contact par frottement ou par complémentarité de forme avec la roue d'entraînement (117) sur cette voie, moyennant quoi un arbre (26, 126) doté d'un filet extérieur peut être mis en rotation, une plateforme de guidage dotée d'un filet intérieur pouvant être déplacée le long dudit arbre (126).

7. Module de pesage (51A, 51B) selon l'une des revendications 1 à 3, **caractérisé en ce que** le mécanisme de transfert présente un élément de levage (123, 423) et l'élément piézoélectrique (19) de l'entraînement déplace un doigt d'entraînement (120) sur une voie elliptique, le doigt d'entraînement (120) pouvant être mis en contact périodiquement directement avec l'élément de levage (123, 323, 423) ou le support de poids d'étalonnage (314, 314A, 314B) sur cette voie.

8. Module de pesage (51A, 51B) selon l'une des revendications 1 à 7, **caractérisé en ce que** l'élément de levage du mécanisme de transfert est conçu comme un excentrique ou comme des clavettes déplaçables par paires les unes contre les autres.

9. Module de pesage (51A, 51B) selon l'une des revendications 1 à 7, **caractérisé en ce que** l'élément de levage (123) du mécanisme de transfert est conçu comme au moins un élément de levier à genouillère (47, 147).

10. Module de pesage (51A, 51B) selon la revendication 9, **caractérisé en ce que** l'élément de levier à genouillère (47) présente des pièces en forme de disque (49, 65) reliées de façon articulées les unes aux autres, l'une d'entre elles présentant une région avec un renflement semi-circulaire (66), contre la surface extérieure de laquelle bute un doigt d'entraînement (120).

11. Module de pesage (51A, 51B) selon la revendication 9, **caractérisé en ce que** l'élément de levier à genouillère (147) présente des pièces en forme de disque (49, 165) reliées de façon articulée les unes aux autres, l'une d'entre elles étant conçu comme un cadre en forme de disque avec une surface intérieure (67) partiellement circulaire, contre laquelle bute un doigt d'entraînement (120).

12. Module de pesage (51A, 51B) selon l'une des revendications 1 à 11, **caractérisé en ce que** le dispositif de transmission de force (304) est disposé sur une plaque de base (34), et **en ce que** l'entraînement est disposé dans un évidement (33) dans la plaque de base (34).

13. Module de pesage (51A, 51B) selon la revendication 12, **caractérisé en ce que** la plaque de base (34) présente une épaisseur réduite dans la région de l'évidement, ainsi qu'une ouverture (45) pour le passage d'au moins une partie de l'élément de levage.

14. Module de pesage (51A, 51B) selon l'une des revendications 1 à 13, **caractérisé en ce que** l'entraînement et le mécanisme de transfert situés en dessous ou au-dessus de la cellule de mesure de force (52, 52A, 52B, 152) respective sont disposés à l'intérieur de l'espace de construction (54A, 54B) de celle-ci.

15. Dispositif de pesage avec au moins deux modules de pesage (51A, 51B) selon l'une des revendications 1 à 14.

16. Dispositif de pesage selon la revendication 15, **caractérisé en ce que** chaque cellule de mesure de force (52, 52A, 52B, 152) possède un ensemble de poids d'étalonnage (304) apte à être actionné individuellement.

17. Dispositif selon la revendication 15 ou 16, **caractérisé en ce que** les modules de pesage (51A, 51B) sont disposés sous la forme d'une matrice bidimensionnelle ou d'un réseau bidimensionnel dans la structure d'accueil (50).
